# EUROPÄISCHE PATENTANMELDUNG

(11) **EP 1 818 606 A1**
(43) Veröffentlichungstag der Anmeldung: **15.08.2007**
(21) Anmeldenummer: 06002550.9
(22) Anmeldetag: 08.02.2006
(51) Int. Cl.: F21V 8/00, G02B 6/00

(54) **Vorrichtung zum gleichmäßigen Ausleuchten einer Fläche**

(71) Anmelder: Zollner Elektronik AG, 93499 Zandt (DE)
(72) Erfinder: Ziemann, Olaf Prof. Dr., 90408 Nürnberg (DE); Poisel, Hans Prof. Dr., 91227 Leinburg (DE)
(74) Vertreter: von Hellfeld, Axel

(57) **Zusammenfassung**

Die Erfindung betrifft eine Vorrichtung zum gleichmäßigen Ausleuchten einer Fläche (12, 24) mit einem Körper (10) in dem eine Vielzahl von Lichtquellen (14) in einer zu der Fläche im Wesentlichen parallelen Lichtquellenebene (16) so angeordnet sind, dass die Hauptabstrahlrichtungen (18) der Lichtquellen normal zu der Lichtquellenebene (16) ausgerichtet sind, und mit Reflexions- und/oder Diffusionsmitteln (20, 22) an und/oder in dem Körper (10), zur Homogenisierung der Strahlung.

## Beschreibung

Die Erfindung betrifft eine Vorrichtung zum gleichmäßigen Ausleuchten einer Fläche.

Bei einer Vielzahl von Anwendungen besteht ein Bedarf, eine größere Fläche, wie zum Beispiel einen Bildschirm, eine Anzeigetafel, ein Reklamefeld etc., möglichst gleichmäßig, d.h. homogen auszuleuchten, insbesondere mit einer Hinterleuchtung. Lichtquellen haben aber in aller Regel keine homogene Verteilung der abgegebenen Strahlung.

Wird also eine Fläche mit Abmessungen im Dezimeterbereich oder im Meterbereich mit einer Vielzahl von diskreten Lichtquellen hinterleuchtet, kommt es ohne besondere Maßnahmen zu keiner homogenen Ausleuchtung der Fläche.

Der Stand der Technik kennt Leuchtpaneele (auch als Flachbildschirme bezeichnet), bei denen ein lichtleitendes Element eingesetzt wird, welches über Höhe oder Breite eine abnehmende Stärke hat. An einem Ende dieses lichtleitenden asymmetrischen Keils wird das Licht von Lichtquellen eingekoppelt und die Formgebung sowie die Oberflächengestaltung des keilförmigen Elementes bewirkt, dass die eingekoppelte Strahlung über ihre Lauflänge verteilt in Abhängigkeit von bestimmten Grenzwinkeln, die zur Reflexion oder Brechung führen, das Element verlässt und so den Schirm ausleuchtet. Bei solchen Systemen werden auch Diffusoren (also eine Diffusion der Strahlung bewirkende Elemente und Flächen) eingesetzt, um die Ausleuchtung des Schirmes weiter zu homogenisieren. Ein Nachteil solcher bekannter Anordnungen liegt darin, dass nur ein relativ geringer Teil des von den Lichtquellen erzeugten Lichtes zur Ausleuchtung des Schirmes beiträgt. Insbesondere beim Einkoppeln des Lichtes aus der Lichtquelle in das verteilende Element treten Verluste auf. Auch führt im Stand der Technik der Einsatz verschiedener Folien zur Diffusion und flächenmäßigen Homogenisierung der Strahlungsverteilung ebenfalls zu beträchtlichen Lichtverlusten, so dass die Leuchtdichte des hinterleuchteten Schirms (zum Beispiel LCD, TFT) abgeschwächt wird. Ziel im derzeitigen Stand der Technik sind aber hinterleuchtete Bildschirme mit hoher Leuchtdichte (so genannte "High Brightness").

Die Erfindung setzt sich das Ziel, eine Vorrichtung zum gleichmäßigen Ausleuchten einer Fläche bereitzustellen, bei der ein möglichst großer Anteil der erzeugten Strahlung zu einer möglichst gleichmäßigen (homogenen) Ausleuchtung einer Fläche ausgenutzt wird. In diesem Sinne wird eine homogene Ausleuchtung einer Fläche insbesondere dann erreicht, wenn Helligkeitsschwankungen innerhalb der vom menschlichen Auge akzeptierten Grenzen liegen, zum Beispiel die Schwankungen vierzig Prozent, insbesondere dreißig Prozent oder weniger ausmachen. Dabei soll die Vorrichtung einen möglichst flachen Aufbau aufweisen.

Hierzu stellt die Erfindung eine Vorrichtung bereit zum gleichmäßigen Ausleuchten einer Fläche, mit einem Körper, in dem eine Vielzahl von Lichtquellen in einer zu der Fläche im Wesentlichen parallelen Lichtquellenebene so angeordnet sind, dass die Hauptabstrahlrichtungen der Lichtquellen normal zu der Lichtquellenebene ausgerichtet sind, und mit Reflexions- und/oder Diffusionsmitteln an und/oder in dem Körper zur Homogenisierung der Strahlung.

Dabei ist insbesondere vorgesehen, dass in zumindest einer Reflexions- und/oder Diffusionsebene zwischen der Lichtquellenebene und der Fläche Mittel angeordnet sind, die in Bereichen nahe der Hauptabstrahlrichtungen stärkere Reflexions- und/oder Diffusionswirkung haben als in davon weiter entfernten Bereichen.

Die mit den vorstehend beschriebenen Reflexions- und/oder Diffusionsmitteln nicht in Richtung auf die auszuleuchtende Fläche durchgelassene Strahlung gelangt zurück in den Bereich der Lichtquellen und wird dort vorzugsweise wiederum von andere Mitteln wieder in Richtung auf die auszuleuchtende Fläche umgelenkt. Insgesamt entsteht so eine weitgehende Homogenisierung der die Fläche ausleuchtenden Strahlung bei hoher Ausbeute der durch die Lichtquellen erzeugten Strahlung.

Als Lichtquellen sind bevorzugt LEDs vorgesehen.

Eine andere bevorzugte Ausgestaltung sieht vor, dass der genannte Körper eine Platte aus Kunststoff ist. Bei dieser Variante der Erfindung werden auf einer Seite der Platte die Lichtquellen in einer bestimmten geometrischen Verteilung, zum Beispiel in der Art einer Matrix, eingelassen und die gegenüberliegende Fläche der Kunststoffplatte wird mit den vorstehend beschriebenen Mitteln weitgehend homogen ausgeleuchtet. Dabei kann die auszuleuchtende Fläche auch eine unter Abstand zu der genannten Platte angeordnete Fläche sein, die sich parallel zur Hauptebene der Platte erstreckt.

Gemäss einer anderen Variante der Erfindung ist der genannte Körper kastenartig ausgestaltet, wobei die Lichtquellen am Boden des Kastens in der beschriebenen Weise angeordnet sind und sich die Reflexions- und Diffusionsmittel im Kasten und/oder auf der dem Boden gegenüberliegenden Kastenoberfläche befinden.

Nachfolgend werden Ausführungsbeispiele der Erfindung anhand der Zeichnung näher erläutert. Es zeigt:
Figur 1, einen Teil einer Vorrichtung zum gleichmäßigen Ausleuchten einer Fläche;
Figur 2 einen Schnitt durch ein Detail einer anderen Ausgestaltung einer Vorrichtung zum Ausleuchten einer Fläche;
Figur 3 einen schematischen Schnitt durch ein weiteres Ausführungsbeispiel einer Vorrichtung zum Ausleuchten einer Fläche; und
Figur 4 einen schematischen Schnitt durch ein anderes Ausführungsbeispiel einer Vorrichtung zum gleichmäßigen Ausleuchten einer Fläche.

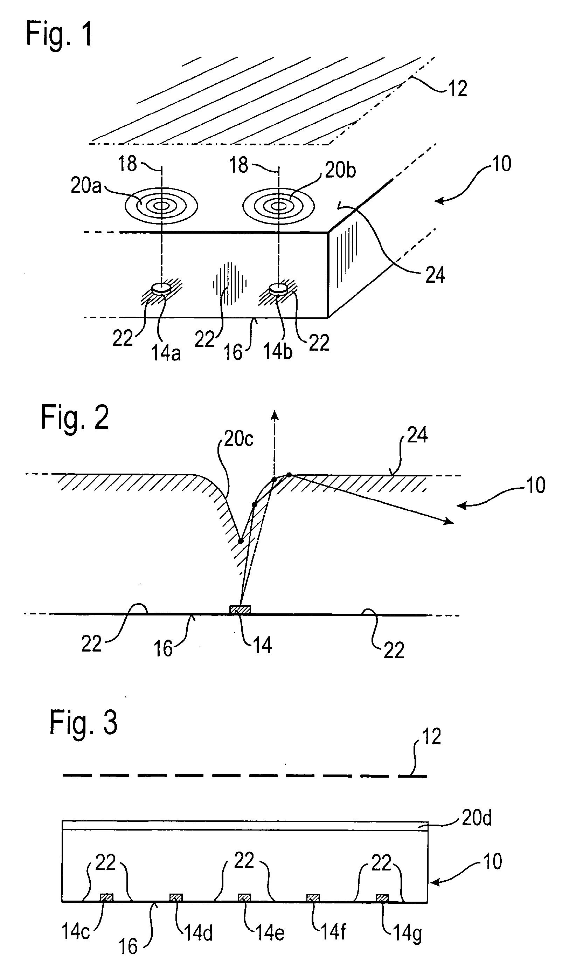

Figur 1 zeigt ein erstes Ausführungsbeispiel einer Vorrichtung zum gleichmäßigen Ausleuchten einer Fläche. Hierzu dient ein plattenförmiger Körper 10 aus transparentem Kunststoff, wie zum Beispiel PMMA. Homogen ausgeleuchtet soll eine Fläche 12 werden, die sich gemäß Figur 1 oberhalb des Körpers 10 befindet. Ziel der homogenen Ausleuchtung kann aber auch die obere Oberfläche 24 des Körpers 10 selbst sein.

Hierzu sind in die Bodenfläche des Körpers 10 matrixartig eine Vielzahl von LEDs 14a, 14b (nur zwei gezeigt) eingelassen. Die LEDs sind mit einem transparenten Kleber, dessen Brechzahl kleiner oder gleich ist als die des Kunststoffs, in die transparente planparallele Kunststoffplatte 10 eingebaut und emittieren ihre gesamte Strahlung in den plattenförmigen transparenten Kunststoffkörper 10. LEDs haben üblicherweise eine keulenförmige Strahlungsverteilung, zum Beispiel mit Lambertcharakteristik. Die Hauptstrahlungsrichtungen 18 der LEDs 14a, 14b stehen somit senkrecht auf der Ebene 16, in welcher die LEDs angeordnet sind. Diese Ebene wird hier als Lichtquellenebene 16 bezeichnet. Aufgrund der beschriebenen Strahlungscharakteristik der LEDs würde die Fläche 12 ohne weitere Maßnahmen stark inhomogen ausgeleuchtet. Diejenige Strahlung, die mit Winkeln kleiner als der Grenzwinkel der Totalreflexion auf die Oberfläche 24 des Körpers 10 trifft, wird den Körper über die Oberfläche 24 verlassen und die Fläche 12 ausleuchten, wobei entsprechend der Verteilung der LEDs 14a, 14b starke Maxima und dazwischen Minima auftreten würden.

Zur Homogenisierung der Strahlungsverteilung in der Fläche 12 sind Reflexionsmittel 20a, 20b in der Oberfläche 24 des transparenten Körpers 10 vorgesehen. Die Reflexionsmittel 20a, 20b sind inhomogen in ihrer Wirkung derart, dass sie um so mehr von den LEDs 14a, 14b kommende Strahlung reflektieren, je näher die Strahlung an den zentralen Strahlungsachsen liegt, also an den Hauptabstrahlrichtungen 18. Die Reflexionsmittel 20a, 20b sind also teilreflektierend und lassen um so mehr Strahlung in Richtung auf die Fläche 12 durch, je weiter die Strahlung von den Hauptabstrahlrichtungen 18 entfernt auf die Oberfläche 24 des Körpers 10 trifft. Dabei ist jeder LED 14a, 14b jeweils ein Reflexionsmittel 20a bzw., 20b zugeordnet. Die physikalische Ausgestaltung der Reflexionsmittel wird weiter unten beschrieben.

Haben die einzelnen LEDs 14a, 14b (sowie weitere in Figur 1 nicht gezeigte LEDs, die im übrigen Teil des nicht gezeigten Körpers 10 angeordnet sind) eine Lambert'sche Abstrahlcharakteristik (ohne Einsatz von Linsen oder dergleichen), dann ändert sich die Intensität der Bestrahlungsstärke auf der Fläche mit der vierten Potenz des Cosinus des Winkels zwischen der Strahlung und der Hauptabstrahlrichtung 18. Haben dann die Reflexionsmittel 20a, 20b eine hierzu inverse Transmission, also proportional zur vierten Potenz des inversen Cosinus des Winkels, dann verlässt die Oberfläche 24 des Körpers 10 eine in ihrer Intensitätsverteilung schon weitestgehend homogenisierte Strahlung, d.h. die Fläche 12 wird weitgehend homogen ausgeleuchtet.

Ohne zusätzliche Maßnahmen ginge dabei aber Strahlung verloren, zum Beispiel durch die Bodenfläche des transparenten Körpers 10, also durch die Fläche der Lichtquellenebene 16 gemäß Figur 1. Um solche Strahlungsverluste zu vermeiden, weist die Bodenfläche des Körpers 16 Reflexionsmittel 22 auf, welche die von den Reflexionsmitteln 20a, 20b oder auch woanders reflektierte Strahlung wieder in Richtung auf die auszuleuchtende Fläche umlenken.

Werden LEDs mit Lambertcharakteristik in Verbindung mit einer PMMA Platte verwendet, so betragen die Verluste ohne die beschriebenen zusätzlichen Maßnahmen in Form der Reflexionsmittel 22 zum Beispiel typischerweise 50 Prozent. Werden die Reflexionsmittel 22 insbesondere diffus reflektierend ausgestaltet, zum Beispiel durch Aufbringung einer weißen Farbschicht auf die Bodenfläche des Körpers 10, wird die auftreffende Strahlung wieder in Winkelbereiche gelenkt, in denen sie aus der Oberfläche 24 des Körpers 10 austritt. Mit einer solchen Anordnung kann es zu Mehrfachreflexionen kommen und im Ergebnis wird nahezu die gesamte Strahlung nach oben auf die auszuleuchtende Fläche 12 gerichtet. Eine solche Anordnung mit einer reflektierenden Bodenfläche des transparenten Körpers 10 wirkt auch homogenisierend, ohne die besonderen Reflexionsmittel 20a, 20b, allerdings wird in den meisten Fällen, insbesondere bei Ausleuchtungen großer Flächen mit einer begrenzten Anzahl von LEDs, die zusätzliche Maßnahme der Reflexionsflächen 20a, 20b zur Erreichung der gewünschten Homogenität und Strahlungsausbeute erforderlich sein.

Die Reflexionsmittel 20a, 20b sind, wie oben beschrieben, teilreflektierend und ihre Reflexionseigenschaften sind inhomogen derart, dass der Reflexionsgrad in dem Schnittpunkt der Hauptabstrahlrichtung 18 am höchsten ist und dann radial nach außen, bezogen auf die Hauptabstrahlrichtung 18, abnimmt, zum Beispiel gemäß der oben beschriebenen, zur Lambertcharakteristik inversen Funktion.

Beispielsweise können die Reflexionsmittel 20a, 20b in Form von teilreflektierenden Spiegelflächen ausgebildet sein, welche in den Hauptabstrahlrichtungen 18 zum Beispiel neunzig Prozent der Strahlung reflektieren und demgemäß zehn Prozent der Strahlung in Richtung auf die Fläche 12 durchlassen. In erster Näherung kann der sinnvolle Reflexionsgrad und dessen radiale Variation abgeschätzt werden aus dem Verhältnis der leuchtenden Flächen der Lichtquellen zur restlichen Oberfläche 24. Dabei kann die Reflexion diffus gestaltet werden, um eine weitgehend statistische, d.h. homogene Strahlungsverteilung zu fördern.

Besonders geeignet als Reflexionsmittel 20a, 20b sind sogenannte Apodisationsfilter.

Eine weitere Verfeinerung der Reflexionsmittel 20a, 20b berücksichtigt, dass nicht nur Strahlung direkt von den jeweils zugeordneten LEDs 14a bzw. 14b einfällt, sondern jeweils auch Strahlung benachbarter LEDs und die beschriebene reflektierte Strahlung und Streustrahlung, welche sozusagen einen "zweiten Versuch" unternehmen, durch die Oberfläche 24 aus dem Körper 10 auszutreten. Insofern ist die oben beschriebene, zur Strahlungscharakteristik der LEDs inverse Transmission der Reflexionsmittel 20a, 20b weiter zur Förderung der Homogenisierung der Strahlung zu modifizieren unter Berücksichtigung der genannten reflektierten Strahlung und Streustrahlung. Hierzu dienen rechnerische Simulationen unter Berücksichtigung der genannten Parameter.

Zur weiteren Vermeidung von Strahlungsverlusten sind die Randbereiche des plattenförmigen Körpers 10 ebenfalls reflektierend ausgeführt, so dass die Strahlung letztlich nur über die Oberfläche 24 aus dem Körper 10 austreten kann.

Die Reflektionsmittel 20a, 20b können unterschiedlich ausgeführt sein, zum Beispiel bei Verwendung einer transparenten Kunststoffplatte (z.B. PMMA) als Körper 10 kann eine ringförmige, d.h. radial variierende Bedruckung mit weißer Farbe unterschiedlicher Dichte erfolgen. Auch kann eine Bedampfung mit reflektierenden Metallen (Ag, Al, Cr etc.) zur Erzeugung der Teilreflektion in an sich bekannter Weise eingesetzt werden. Auch sind als solche teilreflektierende Folien bekannt, deren Transmission dann in der beschriebenen Weise ausgestaltet ist.

Auch kann die Oberfläche 24 des transparenten Körpers selbst geometrisch so gestaltet werden, dass die gewünschte, variierende Teilreflektivität erreicht wird.

Dies ist in Figur 2 schematisch gezeigt. Figur 2 zeigt einen Teilschnitt durch einen transparenten Körper 10 dessen Oberfläche so gestaltet ist, dass aufgrund von Einschnitten die von einer LED 14 kommenden Strahlung entsprechend dem jeweiligen Einfallswinkel in Bezug auf die Oberfläche 24 entweder reflektiert oder in Richtung auf die auszuleuchtende Fläche 12 (in Figur 2 weggelassen ansonsten analog Figur 1) gebrochen wird. In den Figuren sind einander funktionsgleiche oder - ähnliche Bauteile mit gleichen Bezugszeichen versehen. Bei der Ausgestaltung gemäß Figur 2 sind also die Reflexionsmittel 20a, 20b gemäß Figur 1 so ausgestaltet, dass die Oberfläche 24 rotationssymmetrisch um die Hauptabstrahlrichtungen 18 herum so strukturiert ist, dass die Transmission wie oben beschrieben variiert.

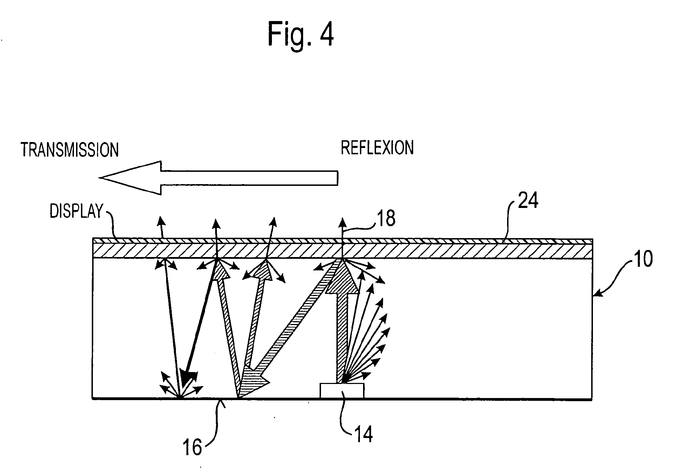

Figur 3 zeigt ein Ausführungsbeispiel, bei dem der Körper 10 kastenförmig ist. Eine Vielzahl von LEDs 14c, 14d, 14e, 14f, 14g sind am Boden des Kastens matrixförmig (2-dimensional) verteilt. Zwischen den LEDs ist die Bodenplatte diffus reflektierend ausgestattet, entsprechend dem Ausführungsbeispiel gemäß Figur 1. Die gegenüberliegende Fläche des Kastens ist mit einer Filterplatte 20d versehen. Die Strahlungsverläufe einer solchen kastenförmigen Anordnung sind mit Blick auf eine einzige LED 14 in Figur 4 näher erläutert. Für die anderen LEDs gilt eine analoge Strahlungsverteilung.

Wie Figur 4 zeigt, ist auf der Oberfläche des Kastens ein Apodisationsfilter angebracht. Dargestellt ist mit Pfeilen die keulenförmige Charakteristik der von der LED 14 emittierten Strahlung. Das Apodisationsfilter hat dort, wo die Hauptabstrahlrichtung 18 die Oberfläche 24 senkrecht schneidet, die höchste Reflexion und somit die geringste Transmission. Reflexion und Transmission sind in dem querverlaufenden Pfeil graphisch dargestellt. Die Anordnung ist rotationssymmetrisch um die Hauptabstrahlrichtung 18. Beim Ausführungsbeispiel gemäß Figur 4 bildet die Oberfläche 24 des Kastens 10 direkt die auszuleuchtende Fläche d.h. ein "Display".

## Patentansprüche

1. Vorrichtung zum gleichmäßigen Ausleuchten einer Fläche (12, 24) mit
- einem Körper (10) in dem eine Vielzahl von Lichtquellen (14) in einer zu der Fläche im Wesentlichen parallelen Lichtquellenebene (16) so angeordnet sind, dass die Hauptabstrahlrichtungen (18) der Lichtquellen normal zu der Lichtquellenebene (16) ausgerichtet sind, und mit
- Reflexions- und/oder Diffusionsmitteln (20, 22) an und/oder in dem Körper (10), zur Homogenisierung der Strahlung.

2. Vorrichtung nach Anspruch 1, **dadurch gekennzeichnet, dass** in einer Reflexions- und/oder Diffusionsebene (24) zwischen der Lichtquellenebene (16) und der Fläche (12) Mittel (20) angeordnet sind, die in Bereichen nahe der Hauptabstrahlrichtungen (18) der Lichtquellen stärkere Reflexions- und/oder Diffusionswirkung haben als in davon weiter entfernten Bereichen.

3. Vorrichtung nach Anspruch 2, **gekennzeichnet durch** Mittel (22) zum Reflektieren und/oder diffundieren von Strahlung zwischen und /oder hinter den Lichtquellen (14).

4. Vorrichtung nach einem der vorhergehenden Ansprüche, **dadurch gekennzeichnet, dass** die Lichtquellen (14) LEDs sind.

5. Vorrichtung nach einem der vorhergehenden Ansprüche, **dadurch gekennzeichnet, dass** der Körper (10) eine Platte aus Kunststoff ist.

6. Vorrichtung nach einem der Ansprüche 1 bis 4, **dadurch gekennzeichnet, dass** der Körper (10) ein Kasten ist.
